# EUROPEAN PATENT SPECIFICATION

(11) **EP 3 136 001 B1**
(45) Date of publication and mention of the grant of the patent: **28.05.2025**
(21) Application number: 14890007.9
(22) Date of filing: 29.08.2014
(51) Int. Cl.: F24C 7/08, H05B 6/68, H05B 6/70

(54) **MICROWAVE OVEN**
MIKROWELLENOFEN
FOUR À MICRO-ONDES

(30) Priority: 24.04.2014 CN 201420205466 U
(43) Date of publication of application: 01.03.2017
(73) Proprietor: GUANGDONG MIDEA KITCHEN APPLIANCES MANUFACTURING CO., LTD., Shunde District, Foshan, Guangdong 528311 (CN); MIDEA GROUP CO., LTD., Guangdong 528311 (CN)
(72) Inventor: ZHANG, Feina, Foshan, Guangdong 528311 (CN); TANG, Xiangwei, Foshan, Guangdong 528311 (CN); DU, Xiantao, Foshan, Guangdong 528311 (CN)
(74) Representative: RGTH
(86) International application number: PCT/CN2014/085593
(87) International publication number: WO 2015/161605

(56) References cited:
- EP-A1- 2 306 785
- EP-B1- 2 306 785
- WO-A2-02/35886
- CN-C- 1 148 108
- CN-C- 1 290 378
- CN-U- 203 797 741
- JP-A- S60 143 592
- US-A- 3 662 140
- US-A- 4 107 501
- US-A- 4 714 810

## Description

### Field of the Invention

The present invention relates to the field of household appliances, and in particular, to a microwave oven.

### Background of the Invention

Microwave ovens are common appliances used for heating or cooking, with the principle of making water molecules of food generate high frequency oscillation by microwaves to heat or cook the food by heat generated by friction. With the development of the semiconductor microwave technology, semiconductor microwave ovens employing semiconductor microwave generators in place of magnetrons to generate the microwaves have emerged. A microwave source of the existing semiconductor microwave oven mainly adopts the source amplification principle or the LDMOS (laterally diffused metal oxide semiconductor) oscillation principle, and the amplified microwaves are exported from microwave output port, and through connection with an antenna or probe or other feed-in device, are directly fed into cooking cavity. However, in such a manner of directly feeding the amplified microwaves into the cavity, microwaves will be reversely transmitted to the microwave source directly, which affects the normal work of the microwave source, and if the microwaves transmitted back to the microwave sources are too large, the microwave source could be even burnt out.

US 4 107 501 A discloses a microwave oven system in which a magnetron supplies microwave energy to a microwave oven through an isolator structure comprising a three-port circulator having a microwave energy absorbing load coupled to the third port, with the temperature of said being sensed by a first switch and a second thermally operated switch.

WO 02/35886 A2 discloses serial microwave feeding to a cavity of a microwave oven in order to provide heating of a load that is placed in the cavity.

EP 2 306 785A1 discloses a microwave heating device provided with a microwave generation part configured by using a semiconductor element.

JP S60 143592 A also discloses a microwave heating device with a main transmission path, a sub transmission line and a resistor in order to reuse microwave power reflected from the heating chamber.

### Summary of the Invention

The present invention aims at solving at least one of the technical problems in the prior art. To this end, the object of the present invention is to provide a microwave oven, which comprises a strong anti-jamming capability and a high sensitivity so that the accuracy of the detection result of the detector for feeding a controller of the microwave oven is improved. To achieve the above object, the present invention provides a microwave oven, including a cooking cavity; a microwave source; a controller, which is connected to the microwave source, for controlling the power of the microwave source; and a first isolator for feeding amplified microwaves into the cooking cavity after passing through the first isolator, which is provided with a first input port, a first output port and a first isolation port, the first input port being connected to the microwave source, the first output port being connected to the cooking cavity, a second isolator for feeding amplified microwaves, that are reversely transmitted by the the cooking cavity, into the cooking cavity again by the second isolator, wherein the second isolator is provided with a second input port, a second output port and a second isolation port, and a second feed-in device is further arranged on the cooking cavity; and the first isolation port being connected with a load, wherein the load is a resistor, one end of the resistor being electrically connected with the first isolation port via the second isolation port, and the other end of the resistor being grounded, a first feed-in device is arranged on the cooking cavity, and the first output port is communicated with the cooking cavity through the first feed-in device; wherein the second input port is connected to the first isolation port, the second output port is communicated with the cooking cavity through the second feed-in device, and one end of the resistor is connected with the second isolation port; and a detector, which is connected with the first isolation port, for detecting microwave signal strength output by the first isolation port and feeding back a detection result to the controller, wherein the detector is further connected with the second input port of the second isolator;
wherein the detector comprises a coupler, which is connected with the first isolation port and both the first feed-in device and the second feed-in device are welded or clamped or screwed on the cooking cavity and both are probes or antennas.

According to the microwave oven provided by the present invention, since the first isolator is arranged between the microwave source and the cooking cavity, the matching between the microwave source and the cooking cavity is optimized, the first isolation port of the first isolator is connected with the load, and when amplified microwaves are reversely transmitted by the cooking cavity, the reversely transmitted microwaves will be consumed by the load connected with the first isolator, thereby avoiding the problem that the microwave source is burnt out because the reversely transmitted microwaves are too large and guaranteeing the service life of the microwave source, and thus the product quality is improved.

The resistor is small in volume and low in cost, occupies no internal space of the microwave oven and does not increase the production cost of the microwave oven, and moreover, the resistor can effectively consume the microwaves reversely transmitted by the cooking cavity, thereby avoiding the problem that the microwave source is burnt out because the reversely transmitted microwaves are too large, and guaranteeing the service life of the microwave source.

Due to the arrangement of the microwave feed-in device, the connection between the isolator and the cooking cavity is simple and convenient, and meanwhile, the transmission reliability of microwave signals is effectively guaranteed.

The amplified microwaves are fed into the cooking cavity after passing through the first isolator, at this time, the microwaves reversely transmitted by the cooking cavity are fed into the cooking cavity again by the second isolator, so the utilization rate of the microwaves is effectively improved, and the microwaves reversely transmitted by the cooking cavity again are consumed by the resistor connected with the isolation port of the second isolator, thereby effectively avoiding the problem that the microwave source is burnt out because the reversely transmitted microwaves are too large, and guaranteeing the service life of the microwave source.

The detector detects the microwave signal strength output by the first isolation port and sends the detection result to the controller, and the controller adjusts the voltage or frequency or other parameter of the microwave source according to the received detection result, so the matching between the microwave source and the cooking cavity is optimized.

According to the present invention, the detector includes a coupler, which is connected with the first isolation port.

The coupler has the advantages of strong anti-jamming capability, high sensitivity and the like, so the accuracy of the detection result of the detector is effectively guaranteed.

According to the present invention, both of the first feed-in device and the second feed-in device are welded or clamped or screwed on the cooking cavity.

The welding or clamping or screwing has good connection strength, so the connection strength of the first feed-in device and the second feed-in device with the cooking cavity is effectively guaranteed.

According to the present invention, both of the first feed-in device and the second feed-in device are probes or antennas.

According to one embodiment of the present invention, the resistance of the resistor is 50Ω. The antennas or the probes have the advantage of high efficiency, so the microwave transmission efficiency can be effectively improved.

The additional aspects and advantages of the present invention will be given in the description below, and a part thereof will become apparent from the description below or is understood through the practice of the present invention.

### Brief Description of the Drawings

The aforementioned and/or additional aspects and advantages of the present invention will become apparent and understandable in the description in combination with accompany drawings below, wherein:
Fig. 1 is a schematic diagram of a first local structure of a microwave oven according to one embodiment of the present invention;
Fig. 2 is a schematic diagram of a second local structure of a microwave oven according to one embodiment of the present invention;
Fig. 3 is a schematic diagram of a third local structure of a microwave oven according to one embodiment of the present invention.

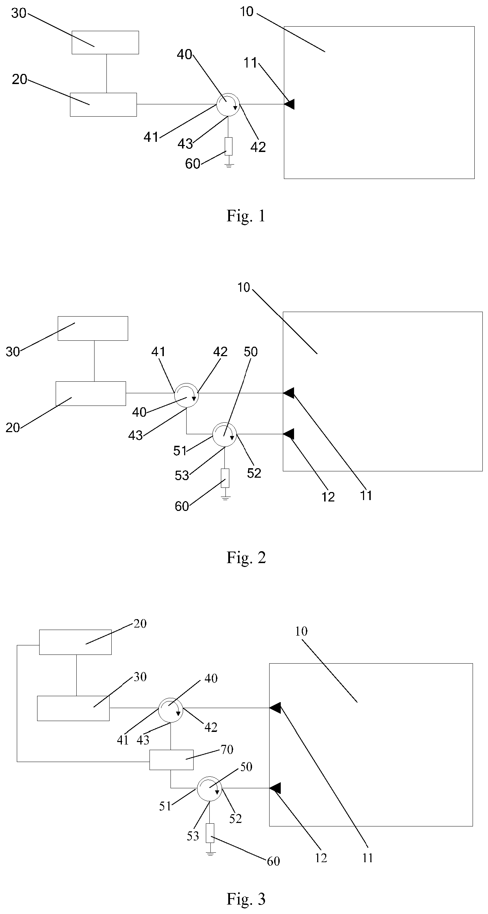

The corresponding relation of reference signs in Figs. 1 to 3 and component names is as follows:
10: cooking cavity, 11: first feed-in device, 12: second feed-in device, 20: microwave source, 30: controller, 40: first isolator, 41: first input port, 42: first output port, 43: first isolation port, 50: second isolator, 51: second input port, 52: second output port, 53: second isolation port, 60: resistor, 70: detector.

### Detailed Description of the Embodiments

In order that the aforementioned objects, features and advantages of the present invention can be understood more clearly, a further detailed description of the present invention will be given below in combination with accompanying drawings and specific embodiments. It should be noted that the embodiments of the present application and the features in the embodiments can be combined with each other without conflict.

A lot of specific details are set forth in the description below to fully understand the present invention, however, the present invention can also be implemented in other manners different from those described herein, and thus the protection scope of the present invention is not limited to the specific embodiments disclosed below.

A microwave oven provided by some embodiments of the present invention will be described below with reference to Figs. 1 to 3, wherein Fig. 3 shows a microwave oven according to the invention.

As shown in Fig. 1, the microwave oven provided by some embodiments of the present invention includes: a cooking cavity 10, a microwave source 20, a controller 30 and a first isolator 40, wherein the controller 30 is connected to the microwave source 20, for controlling the power of the microwave source 20; and the first isolator 40 is provided with a first input port 41, a first output port 42 and a first isolation port 43, the first input port 41 being connected to the microwave source 20, the first output port 42 being connected to the cooking cavity 10, and the first isolation port 43 being connected with a load.

According to the microwave oven provided by the embodiment, since the first isolator 40 is arranged between the microwave source 20 and the cooking cavity 10, the matching between the microwave source and the cooking cavity 10 is optimized, the first isolation port 43 of the first isolator 40 is connected with the load, and when amplified microwaves are reversely transmitted by the cooking cavity 10, the reversely transmitted microwaves will be consumed by the load connected with the first isolator 40, thereby avoiding the problem that the microwave source 20 is burnt out because the reversely transmitted microwaves are too large and guaranteeing the service life of the microwave source 20, and thus the product quality is improved.

Specifically, the load is a resistor 60, one end of the resistor 60 being electrically connected with the first isolation port 41, and the other end of the resistor being grounded; and a first feed-in device 11 is arranged on the cooking cavity 10, and the first output port 42 is communicated with the cooking cavity 10 through the first feed-in device 11.

The resistor 60 is small in volume and low in cost, occupies no internal space of the microwave oven and does not increase the production cost of the microwave oven, and moreover, the resistor 60 can effectively consume the microwaves reversely transmitted by the cooking cavity 10, thereby avoiding the problem that the microwave source 20 is burnt out because the reversely transmitted microwaves are too large, and guaranteeing the service life of the microwave source 20; and due to the arrangement of the microwave feed-in device, the connection between the isolator and the cooking cavity 10 is simple and convenient, and meanwhile, the transmission reliability of microwave signals is effectively guaranteed.

In the embodiment, preferably, the resistance of the resistor 60 is 50Ω.

The first feed-in device 11 is welded or clamped or screwed on the cooking cavity 10.

The welding or clamping or screwing has good connection strength, so the connection strength of the feed-in device with the cooking cavity 10 is effectively guaranteed.

The first feed-in device 11 is a probe or an antenna, and the antenna or the probe has the advantages of high efficiency, so the microwave transmission efficiency can be effectively improved.

In a specific embodiment of the embodiment, as shown in Fig. 2, the microwave oven further includes a second isolator 50, wherein the second isolator 50 is provided with a second input port 51, a second output port 52 and a second isolation port 53, and a second feed-in device 12 is further arranged on the cooking cavity 10; the second input port 51 is connected to the first isolation port 43, the second output port 52 is communicated with the cooking cavity 10 through the second feed-in device 12, and one end of the resistor 60 is connected with the second isolation port 53.

The amplified microwaves are fed into the cooking cavity 10 after passing through the first isolator 40, at this time, the microwaves reversely transmitted by the cooking cavity 10 are fed into the cooking cavity 10 again by the second isolator 50, so the utilization rate of the microwaves is effectively improved, and the microwaves reversely transmitted by the cooking cavity 10 again are consumed by the resistor 60 connected with the isolation port of the second isolator 50, thereby effectively avoiding the problem that the microwave source 20 is burnt out because the reversely transmitted microwaves are too large, and guaranteeing the service life of the microwave source 20.

The second feed-in device 12 is welded or clamped or screwed on the cooking cavity 10.

The welding or clamping or screwing has good connection strength, so the connection strength of the second feed-in device 12 with the cooking cavity 10 is effectively guaranteed.

According to the invention shown in Fig. 3, on the basis of the aforementioned embodiment, the microwave oven further includes a detector, which is connected with the first isolation port 43, for detecting microwave signal strength output by the first isolation port 43 and feeding back a detection result to the controller 30.

The detector 70 detects the microwave signal strength output by the first isolation port 43 and sends the detection result to the controller 30, and the controller 30 adjusts the voltage or frequency or other parameter of the microwave source 20 according to the received detection result, so the matching between the microwave source 20 and the cooking cavity 10 is optimized.

Specifically, the detector includes a coupler, which is connected with the first isolation port 43.

In summary, according to the microwave oven provided by the present invention, the isolator is arranged between the microwave source and the cooking cavity, and the amplified microwaves are fed into the cooking cavity after passing through the isolator, so the matching between the microwave source and the cooking cavity is optimized, the isolation port of the isolator is connected with the load, and when the amplified microwaves are reversely transmitted by the cooking cavity, the reversely transmitted microwaves will be consumed by the load, and the microwave source and the reversely transmitted microwaves are effectively isolated, thereby avoiding the problem that the microwave source is burnt out because the reversely transmitted microwaves are too large and guaranteeing the service life of the microwave source, and thus the product quality is improved.

In the description of the present invention, the terms "first" and "second" are only for the purpose of description, but cannot be understood as indicating or implying relative importance, unless otherwise clearly specified and defined.

In the description of the present invention, the terms "installation", "connection", "connected" and the like should be understood broadly, for example, "connection" can be a fixed connection, can also be a detachable connection or an integral connection; "connected "can refer to a direct connection and can also be refer to an indirect connection by an intermediate medium. Those of ordinary skill in the art can understand the specific meanings of the aforementioned terms in the present invention in accordance with specific conditions. In the description of the specification, the descriptions of the terms "one embodiment", "some embodiments", " specific embodiment" and the like mean that specific features, structures, materials or characteristics described in conjunction with the embodiments or examples are contained in at least one embodiment or example of the present invention. In the specification, the schematic expression of the aforementioned terms does not necessarily refer to the same embodiment or example. Furthermore, the described specific features, structures, materials or characteristics can be combined in any one or more embodiments or examples in proper manners.

## Claims

1. A microwave oven, comprising:
a cooking cavity (10);
a microwave source (20);
a controller (30), which is connected to the microwave source (20), for controlling the power of the microwave source (20);
a first isolator (40) for feeding amplified microwaves, into the cooking cavity (10) after passing through the first isolator (40), which is provided with a first input port (41), a first output port (42) and a first isolation port (43), the first input port (41) being connected to the microwave source (20), the first output port (42) being connected to the cooking cavity (10),
a second isolator (50) for feeding amplified microwaves, that are reversely transmitted by the cooking cavity (10), into the cooking cavity (10) again by the second isolator (50), wherein the second isolator (50) is provided with a second input port (51), a second output port (52) and a second isolation port (53), and a second feed-in device (12) is further arranged on the cooking cavity (10);
wherein the first isolation port (43) of the first isolator (40) being connected with a load, wherein the load is a resistor (60), one end of the resistor (60) being electrically connected with the first isolation port (43) via the second isolation port (53), the other end of the resistor being grounded, a first feed-in device (11) is arranged on the cooking cavity (10), and the first output port (42) is communicated with the cooking cavity (10) through the first feed-in device (11);
wherein the second input port (51) of the second isolator (50) is connected to the first isolation port (43), the second output port (52) is communicated with the cooking cavity (10) through the second feed-in device (12), and one end of the resistor (60) is connected with the second isolation port (53);
**characterized in that** the microwave oven further comprises a detector (70), which is connected with the first isolation port (43) of the first isolator (40), and is configured for detecting microwave signal strength output by the first isolation port (43) and feeding back a detection result to the controller (30), wherein the detector (70) is further connected with the second input port (51) of the second isolator (50);
wherein the detector (70) comprises a coupler, which is connected with the first isolation port (43) and
both the first feed-in device (11) and the second feed-in device (12) are welded or clamped or screwed on the cooking cavity (10) and both are probes or antennas.

2. The microwave oven of claim 1, wherein
the resistance of the resistor (60) is 50Ω.

3. The microwave oven of any one of claim 1 or 2, wherein
the controller (30) adjusts the voltage or frequency or other parameter of the microwave source (20) according to the received detection result.

## Patentansprüche

1. Mikrowellenherd, umfassend:
einen Garraum (10);
eine Mikrowellenquelle (20);
eine Steuerung (30), die mit der Mikrowellenquelle (20) verbunden ist, um die Leistung der Mikrowellenquelle (20) zu steuern;
einen ersten Isolator (40) zum Einspeisen von verstärkten Mikrowellen in den Garraum (10) nach dem Durchgang durch den ersten Isolator (40), der mit einem ersten Eingangsanschluss (41), einem ersten Ausgangsanschluss (42) und einem ersten Isolationsanschluss (43) versehen ist, wobei der erste Eingangsanschluss (41) mit der Mikrowellenquelle (20) verbunden ist und der erste Ausgangsanschluss (42) mit dem Garraum (10) verbunden ist,
einen zweiten Isolator (50) zur Einspeisung von verstärkten Mikrowellen, die vom Garraum (10) durch den zweiten Isolator (50) rückwärts wieder in den Garraum (10) übertragen werden, wobei der zweite Isolator (50) mit einem zweiten Eingangsanschluss (51), einem zweiten Ausgangsanschluss (52) und einem zweiten Isolationsanschluss (53) versehen ist, und ferner eine zweite Einspeisevorrichtung (12) am Garraum (10) angeordnet ist;
wobei der erste Isolationsanschluss (43) des ersten Isolators (40) mit einer Last verbunden ist, wobei die Last ein Widerstand (60) ist, wobei ein Ende des Widerstands (60) elektrisch mit dem ersten Isolationsanschluss (43) über den zweiten Isolationsanschluss (53) verbunden ist, wobei das andere Ende des Widerstands geerdet ist, wobei eine erste Einspeisevorrichtung (11) an dem Garraum (10) angeordnet ist, und wobei der erste Ausgangsanschluss (42) mit dem Garraum (10) durch die erste Einspeisevorrichtung (11) verbunden ist;
wobei der zweite Eingangsanschluss (51) des zweiten Isolators (50) mit dem ersten Isolationsanschluss (43) verbunden ist, der zweite Ausgangsanschluss (52) mit dem Garraum (10) über die zweite Einspeisevorrichtung (12) verbunden ist und ein Ende des Widerstands (60) mit dem zweiten Isolationsanschluss (53) verbunden ist; **dadurch gekennzeichnet, dass** der Mikrowellenherd ferner einen Detektor (70) umfasst, der mit dem ersten Isolationsanschluss (43) des ersten Isolators (40) verbunden ist und zum Erfassen der von dem ersten Isolationsanschluss (43) ausgegebenen Mikrowellensignalstärke und zum Zurückführen eines Erfassungsergebnisses an die Steuerung (30) konfiguriert ist, wobei der Detektor (70) ferner mit dem zweiten Eingangsanschluss (51) des zweiten Isolators (50) verbunden ist;
wobei der Detektor (70) einen Koppler umfasst, der mit dem ersten Isolationsanschluss (43) verbunden ist und
sowohl die erste Einspeisevorrichtung (11) als auch die zweite Einspeisevorrichtung (12) an den Garraum (10) angeschweißt oder angeklemmt oder angeschraubt sind und beide Sonden oder Antennen sind.

2. Mikrowellenherd gemäß Anspruch 1, wobei
der Widerstand des Widerstands (60) 50Ω beträgt.

3. Mikrowellenherd gemäß einem der Ansprüche 1 oder 2, wobei
die Steuerung (30) die Spannung oder Frequenz oder einen anderen Parameter der Mikrowellenquelle (20) gemäß dem empfangenen Erfassungsergebnis einstellt.

## Revendications

1. Four à micro-ondes, comprenant :
une cavité de cuisson 10) ;
une source de micro-ondes (20) ;
un dispositif de commande (30), qui est connecté à la source de micro-ondes (20) pour commander la puissance de la source de micro-ondes (20) ; et
un premier isolateur (40) destiné à fournir des micro-ondes amplifiées dans la cavité de cuisson (10) après le passage à travers le premier isolateur (40), qui est pourvu d'un premier port d'entrée (41), d'un premier port de sortie (42) et d'un premier port d'isolation (43), le premier port d'entrée (41) étant connecté à la source de micro-ondes (20), le premier port de sortie (42) étant connecté à la cavité de cuisson (10),
un deuxième isolateur (50) destiné à fournir des micro-ondes amplifiées, qui sont transmises inversement par la cavité de cuisson (10), dans la cavité de cuisson (10) à nouveau par le deuxième isolateur (50), dans lequel le deuxième isolateur (50) est pourvu d'un deuxième port d'entrée (51), d'un deuxième port de sortie (52) et d'un deuxième port d'isolation (53), et un deuxième dispositif d'alimentation (12) est en outre disposé sur la cavité de cuisson (10) ;
dans lequel le premier port d'isolation (43) du premier isolateur (40) est connecté à une charge,
dans lequel la charge est une résistance (60), une extrémité de la résistance (60) étant connectée électriquement au premier port d'isolation (43) par l'intermédiaire du deuxième port d'isolation (53), et l'autre extrémité de la résistance étant mise à la terre, un premier dispositif d'alimentation (11) est disposé sur la cavité de cuisson (10), et le premier port de sortie (42) communique avec la cavité de cuisson (10) par l'intermédiaire du premier dispositif d'alimentation (11) ;
dans lequel le deuxième port d'entrée (51) du deuxième isolateur (50) est connecté au premier port d'isolation (43), le deuxième port de sortie (52) communique avec la cavité de cuisson (10) par l'intermédiaire du deuxième dispositif d'alimentation (12), et une extrémité de la résistance (60) est connectée au deuxième port d'isolation (53) ;
**caractérisé en ce que** le four à micro-ondes comprend en outre un détecteur (70), qui est connecté au premier port d'isolation (43) du premier isolateur (40), et est configuré pour détecter l'intensité du signal de micro-ondes émis par le premier port d'isolation (43) et pour renvoyer un résultat de détection au dispositif de commande (30), dans lequel le détecteur (70) est en outre connecté au deuxième port d'entrée (51) du deuxième isolateur (50) ;
dans lequel le détecteur (70) comprend un coupleur, qui est connecté au premier port d'isolation (43), et
le premier dispositif d'alimentation (11) et le deuxième dispositif d'alimentation (12) sont tous deux soudés ou serrés ou vissés sur la cavité de cuisson (10) et sont tous deux des sondes ou des antennes.

2. Four à micro-ondes selon la revendication 1, dans lequel
la résistance de la résistance (60) est de 50 Ω.

3. Four à micro-ondes selon l'une quelconque des revendications 1 ou 2, dans lequel
le dispositif de commande (30) ajuste la tension ou la fréquence ou un autre paramètre de la source de micro-ondes (20) selon le résultat de détection reçu.
